# EUROPEAN PATENT SPECIFICATION

(11) **EP 2 252 118 B1**
(45) Date of publication and mention of the grant of the patent: **19.03.2014**
(21) Application number: 10162985.5
(22) Date of filing: 17.05.2010
(51) Int. Cl.: H04W 52/02, H04W 88/10

(54) **Method and apparatus for power conservation for an electronic device**
Verfahren und Vorrichtung zum Energiesparen für eine elektronische Vorrichtung
Procédé et appareil pour la conservation de la puissance dans un dispositif électronique

(30) Priority: 22.12.2009 US 645388; 15.05.2009 US 178926 P; 27.05.2009 US 181645 P
(43) Date of publication of application: 17.11.2010
(73) Proprietor: Novatel Wireless, Inc, San Diego, CA 92121 (US)
(72) Inventor: Wu, John, San Diego, CA 92127 (US); Ong, Thanh, San Diego, CA 92131 (US); Conklin, Todd, San Diego, CA 92117 (US); Kim, Seong Beom, San Diego, CA 92131 (US); You, Gwan Hee, San Diego, CA 92127 (US); Beaulieu, Mark, Escondido, CA 92025 (US); Carlisle, Matthew, Sammamish, WA 98074 (US); Missingham, Errol, San Diego, CA 92129 (US); Souissi, Slim, San Diego, CA 92127 (US)
(74) Representative: Winter, Brandl, Fürniss, Hübner, Röss, Kaiser, Polte - Partnerschaft

(56) References cited:
- WO-A1-2004/075583
- US-A1- 2007 028 131
- US-B1- 6 567 855
- SHIAO-LI TSAO ET AL: "Reducing idle mode power consumption of cellular/VoWLAN dual mode mobiles" GLOBAL TELECOMMUNICATIONS CONFERENCE, 2005. GLOBECOM '05. IEEE ST. LOIUS, MO, USA 28 NOV.-2 DEC. 2005, PISCATAWAY, NJ, USA,IEEE LNKD- DOI:10.1109/GLOCOM.2005.1578289, vol. 5, 28 November 2005 (2005-11-28), pages 2902-2906, XP010879251 ISBN: 978-0-7803-9414-8
- YUVRAJ AGARWAL ET AL: "On Demand Paging Using Bluetooth Radios on 802.11 Based networks" INTERNET CITATION 1 July 2003 (2003-07-01), pages 1-19, XP002555283 Retrieved from the Internet: URL:http://eprints.kfupm.edu.sa/54180/1/54 180.pdf [retrieved on 2009-11-13]

## Description

The present invention relates generally to the field of wireless communication and, more particularly to power conservation for an electronic device.

WO 2004/075583 A1 discloses method and system for reduction of electrosmog in wireless local networks. One or more mobile network units are communicating with a base station of a wireless local network. After a predefinable time interval without a connecting signal, the base station changes over from a normal transmitting-receiving mode into a sleep mode. In the sleep mode no beacon signals and/or other radio frequency signals are transmitted from the base station. If a mobile network unit requires a network connection, it transmits an alert signal, and, upon receiving the alert signal of the mobile network unit, the base station transmits beacon signals to the mobile network unit and changes over into the normal transmitting-receiving mode.

US 2007/0028131 describes an energy saving system for use in an electronic device. The energy saving system includes a battery for supplying the electronic device with energy; a energy detector for measuring a energy level of the battery and for transmitting a battery energy saving control signal when the measured energy level is equal to or less than a predetermined energy level; and a control unit for changing a predetermined first time period into a predetermined second time period which is shorter than the predetermined first time period according to the battery energy saving control signal, and controlling the electronic device to enter a sleep mode state when an elapsed time of not receiving any operations on the electronic device reaches the predetermined second time period.

One aspect of the present invention relates to a router as defined in claim 1.

Executing the command causes at least the first interface module to exit a power conservation mode and enter a full operation mode.

In one embodiment, the first interface module includes a WiFi interface. The second interface module may include a 3G network interface.

In one embodiment, the signal received through the second interface module is a short messaging service (SMS) message. In another embodiment, the signal received through the second interface module is a mobile call.

In another aspect of the invention, a method is provided as defined in claim 6.

### BRIEF DESCRIPTION OF THE DRAWINGS

Figure 1 is a schematic illustration of an arrangement according to an embodiment of the present invention;
Figure 2 is a schematic illustration of a hotspot device in accordance with embodiments of the present invention; and
Figure 3 is a flow chart illustrating a method for power conservation in accordance with an embodiment of the present invention.

### DETAILED DESCRIPTION OF EMBODIMENTS

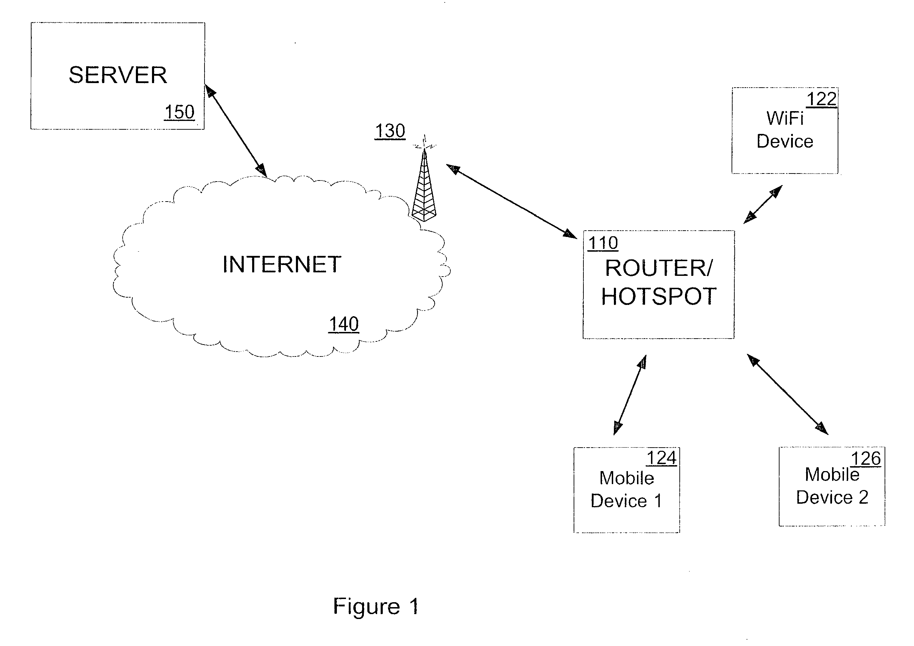

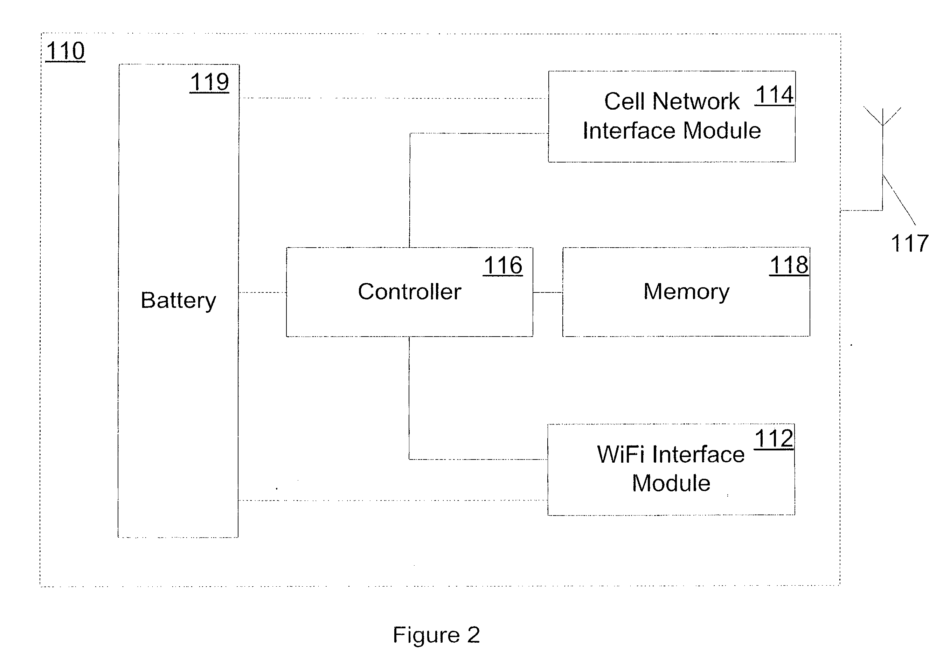

Referring to Figure 1, an arrangement in accordance with embodiments of the present invention is schematically illustrated. In the illustrated arrangement, a router or hotspot device 110 is provided to allow network access to one or more user devices 122, 124, 126. The user devices 122, 124, 126 may include, for example, a laptop, desktop, portable phone, personal digital assistant (PDA), smart phone or any other device capable of wireless communication. In accordance with embodiments of the present invention, the router 110 is a wireless, mobile, portable hotspot device. One embodiment of the router 110 is described in further detail below with reference to Figure 2.

The router 110 may be configured to support a variety of user devices. For example, as illustrated in Figure 1, the router 110 may be accessed by multiple mobile user devices 124, 126, which may be laptops. In addition, WiFi devices, such as a webcam, may also access the router 110. The number of devices which can be supported by the router 110 may vary and may be determined by software, firmware or the like within the router 110.

The router 110 is configured to communicate with a service provider through, for example, a cellular base station 130, through which it may access a communication network 140, such as the Internet. Any of a number of servers (e.g., server 150) may be accessed by the user device through the route 110 and the communication network 140.

Referring now to Figure 2, an embodiment of the router 110 in accordance with embodiments of the present invention is schematically illustrated. In one embodiment, the router 110 is a wireless wide area network (WWAN)/WiFi data modem personal router which allows multiple users to connect to a network (e.g., 3G network) over WiFi. The router 110 includes a first interface module and a second interface module. In one embodiment, the first interface module is a WiFi interface module 112 configured to allow the router 110 to wirelessly communicate with user devices using, for example, an IEEE 802.11 protocol. Of course, those skilled in the art will understand that other communication protocols may be used to interface with user devices.

### DETAILED DESCRIPTION OF THE PREFERRED EMBODIMENTS

Referring to Figure 1, an arrangement in accordance with embodiments of the present invention is schematically illustrated. In the illustrated arrangement, a router or hotspot device I 10 is provided to allow network access to one or more user devices 122, 124, 126. The user devices 122, 124, 126 may include, for example, a laptop, desktop, portable phone, personal digital assistant (PDA), smart phone or any other device capable of wireless communication. In accordance with embodiments of the present invention, the router 110 is a wireless, mobile, portable hotspot device. One embodiment of the router 110 is described in further detail below with reference to Figure 2.

The router 110 may be configured to support a variety of user devices. For example, as illustrated in Figure 1, the router 110 may be accessed by multiple mobile user devices 124, 126, which may be laptops. In addition, WiFi devices, such as a webcam, may also access the router 110. The number of devices which can be supported by the router 110 may vary and may be determined by software, firmware or the like within the router 110.

The router 110 is configured to communicate with a service provider through, for example, a cellular base station 130, through which it may access a communication network 140, such as the Internet. Any of a number of servers (e.g., server 150) may be accessed by the user device through the route 110 and the communication network 140.

Referring now to Figure 2, an embodiment of the router 110 in accordance with embodiments of the present invention is schematically illustrated. In one embodiment, the router 110 is a wireless wide area network (WWAN)/WiFi data modem personal router which allows multiple users to connect to a network (e.g., 3G network) over WiFi. The router 110 includes a first interface module and a second interface module. In one embodiment, the first interface module is a WiFi interface module 112 configured to allow the router 110 to wirelessly communicate with user devices using, for example, an IEEE 802.11 protocol. Of course, those skilled in the art will understand that other communication protocols may be used to interface with user devices.

The second interface module 114 allows the router 110 to wirelessly interface with a network through, for example, a service provider, as illustrated by the base station 130 of Figure 1. In accordance with an embodiment of the present invention, the second interface module 114 allows the router 110 to communicate with a cellular network to obtain access to the Internet. Again, those skilled in the art will understand that any of a variety of communication protocols may be used for communication through the second interface module.

The router 110 is also provided with a controller 116, or a processor, configured to control various operations of the router 110. The controller 116 is coupled to the first and second interface modules 112, 114. Further, the controller 116 may be configured to process signals received through the interface modules 112, 114 and to transmit signals through the interface modules 112, 114. A memory unit 118 is provided to store, for example, data or computer code which may be accessed by the controller 116. The router 110 may also include one or more antenna 117 to receive and transmit electronic signals, for example.

Further, the router 110 includes a power source to supply power to the various components of the router 110. Since the router 110 is a portable electronic device, the power source may be a battery 119. In various embodiments, the battery 119 is a rechargeable battery such as a NiCd, Lithium-Ion or other type of rechargeable battery. Of course, the router 110 may include various other components necessary for operation of the router.

As the router is being used by the various user devices, there may be periods of inactivity when the user devices do not require access to, for example, the internet or other user devices. During such periods of inactivity, the router 110 may continue to operate and await signals from the user devices. In this regard, the interface modules 112, 114 and any associated components may continue to operate and consume battery power. In order to conserve battery life, embodiments of the present invention provide for handling of periods of inactivity by reducing operation of the device during such periods.

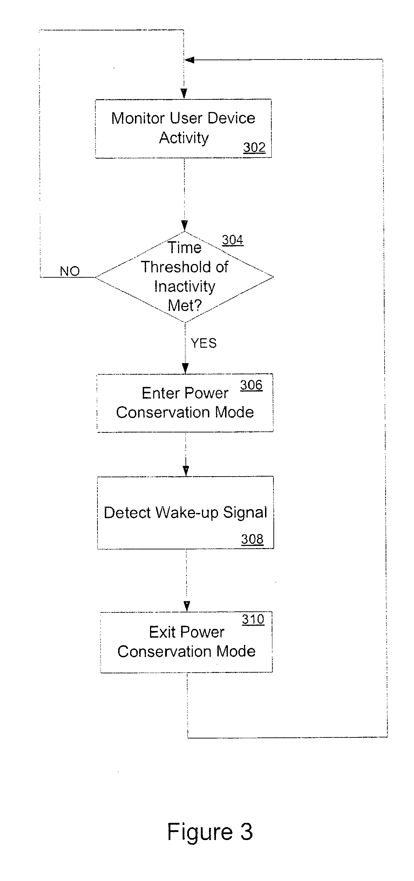

Figure 3 is a flow chart illustrating a method for power conservation in accordance with an embodiment of the present invention. In accordance with the illustrated method, activity associated with various user devices is monitored (block 302). In this regard, the controller 116 or another component (e.g., firmware or software) of the router 110 may monitor any connected devices. The monitoring may include determining whether any user devices are connected to the router 110. In certain embodiments, the monitoring may include detection of traffic between the connected user devices and the router 110. In this regard, Internet Protocol (IP) traffic and WiFi traffic may be monitored separately.

Monitoring of the user device activity at block 302 may be used to detect or determine periods of inactivity. Thus, at block 304, a determination is made as to whether a threshold of inactivity has been met. In this regard, a period of inactivity may be defined if the monitoring of user device activity detects lack of such activity for a certain period of time. The time threshold required to declare a period of inactivity may be fixed within firmware or may be made variable. In one embodiment, the time threshold may be based on input by a user or administrator of the router 110. In another embodiment, the time threshold may be varied based on detected battery levels. In this regard, as remaining battery power decreases, the time threshold may be reduced in order to conserve more battery power.

Further, in making the determination at block 304, inactivity may be determined if no user devices are detected as connected to the router 110. If no user devices are detected as connected for the length of time set as the threshold, a period of inactivity may be declared. In other embodiments, at block 304, inactivity may be determined even when connected user devices are detected. In this case, inactivity may be determined based on the lack of traffic between the connected user devices and the router 110. The lack of traffic may be lack of IP traffic, lack of WiFi traffic or both.

If the determination is made at block 304 that the time threshold of inactivity has not been met, the router 110 stays in operational mode and continues to monitor user device activity at block 302. On the other hand, if the determination is made at block 304 that the time threshold of inactivity has been met (e.g., period of inactivity is declared), the method proceeds to block 306.

At block 306, the router 110 enters a power conservation mode. In the power conservation mode, certain components of the router 110 may be turned off or placed into a low-power state. In one embodiment, the WiFi interface module 114 and/or other components may be turned off. Further, the controller and/or other components may be placed in a low-power state or sleep state. The low-power state or sleep state may be defined by a reduced operation level of the components resulting in reduced power consumption.

In one embodiment, the components that are turned off or placed in a low-power mode may be determined by the basis for the period of inactivity. For example, if a period of inactivity was determined at step 304 based on a lack of user devices connected to the router 110, the power conservation mode may include placing the entire device in a low-power mode. Alternatively, if one or more user devices are connected, but a period of inactivity is determined based on a lack of traffic between the user devices and the router 110, the power conservation mode may include only placing the WiFi interface module 114 in a low-power mode.

In certain implementations of the router 110, a wake-up button may be provided on the body of the router 110. When a user wishes to access the capabilities of the router 110, the button is pressed by the user, and the router 110 is placed in a full operational mode. In accordance with certain embodiments of the present invention, the router 110 may be configured to exit the power conservation mode even if the user cannot physically reach the router 110. In this regard, the router 110 (or the controller 116 of the router 110) may be configured to detect an incoming wake-up signal, as indicated in block 308 of Figure 3. The ability to detect the wake-up signal may be implemented as software or firmware. In various embodiments, the router is configured to detect an over-the-air channel, such as wireless wide area network (WWAN) channel for such a signal.

The wake-up signal may be in the form of a mobile call or a short messaging service (SMS) message received by the router 110. In this regard, the wake-up signal may be received through a 3G network interface module, such as the second interface module 114 of the router. The wake-up signal may be sent by the user using either the same device as the device desiring access to the router 110 or a different device. For example, if the user desires access to the router 110 for a laptop computer, the user may send a mobile call or an SMS message from a separate mobile phone to wake up the router 110. Alternatively, if the user desires access to the router 110 for a smart phone, the same smart phone may be used to send the mobile call or the SMS message.

In various embodiments, the mobile call or the SMS message may include any of a variety of commands. As described above, in one embodiment, the mobile call or SMS message may command the router 110 to exit the power conservation mode and enter a full operational mode. Thus, in accordance with embodiments of the present invention, while the router 110 is in a power conservation mode with one or more components in a low-power mode or turned off, a wake-up signal may be detected to place the device in a full operational mode. Thus, while the WiFi interface module is turned off, a mobile call or an SMS message may be received through a 3G network interface module

in other embodiments, the mobile call or SMS message may be configured to adjust security settings of the router 110. For example, an administrator of the router 110 may select from a set of preconfigured security profiles of the router 110 by sending a mobile call or an SMS message. In other embodiments, the administrator may use the mobile call or SMS message to lock or shut down the router 110. Thus, whether the router 110 is in a power conservation mode or in a full operational mode, the administrator may use any mobile device to send commands to the router 110 through a 3G network, for example.

Various embodiments of the present invention may be implemented in a system having multiple communication devices that can communicate through one or more networks. The system may comprise any combination of wired or wireless networks such as a mobile telephone network, a wireless Local Area Network (LAN), a Bluetooth personal area network, an Ethernet LAIN, a wide area network, the Internet, etc.

Communication devices may include a mobile telephone, a personal digital assistant (PDA), a notebook computer, etc. The communication devices may be located in a mode of transportation such as an automobile.

The communication devices may communicate using various transmission technologies such as Code Division Multiple Access (CDMA), Global System for Mobile Communications (GSM), Universal Mobile Telecommunications System (UMTS), Time Division Multiple Access (TDMA), Frequency Division Multiple Access (FDMA), Transmission Control Protocol/Internet Protocol (TCP/IP), Short Messaging Service (SMS), Multimedia Messaging Service (MMS), e-mail, Instant Messaging Service (IMS), Bluetooth, IEEE 802.11, etc.

An electronic device in accordance with embodiments of the present invention may include a display, a keypad for input, a microphone, an ear-piece, a battery, and an antenna. The device may further include radio interface circuitry, codec circuitry, a controller and a memory.

Various embodiments described herein are described in the general context of method steps or processes, which may be implemented in one embodiment by a software program product or component, embodied in a machine-readable medium, including executable instructions, such as program code, executed by entities in networked environments. Generally, program modules may include routines, programs, objects, components, data structures, etc. that perform particular tasks or implement particular abstract data types. Executable instructions, associated data structures, and program modules represent examples of program code for executing steps of the methods disclosed herein. The particular sequence of such executable instructions or associated data structures represents examples of corresponding acts for implementing the functions described in such steps or processes.

Software implementations of various embodiments of the present invention can be accomplished with standard programming techniques with rule-based logic and other logic to accomplish various database searching steps or processes, correlation steps or processes, comparison steps or processes and decision steps or processes.

The foregoing description of various embodiments have been presented for purposes of illustration and description. The foregoing description is not intended to be exhaustive or to limit embodiments of the present invention to the precise form disclosed, and modifications and variations are possible without departing from the scope of the invention defined by the claims.

## Claims

1. A router (110), comprising:
a first interface module (112) configured to wirelessly interface with one or more user devices;
a second interface module (114) configured to interface with a wireless communication network;
a battery (119); and
a controller (116) configured to:
detect a signal received through the second interface module, the signal including a command; and
execute the command,
wherein executing the command causes one or more components of the router (110) to exit a power conservation mode and enter a full operation mode,
wherein the controller (116) is further configured to:
determine a period of inactivity; and
place one or more components of the router (110) in the power conservation mode,
the controller being configured to determine the period of inactivity based on detection of no user devices connected to the first interface module for a threshold length of time, and
if user devices are connected to the first interface module, detection of no traffic between user devices connected to the first interface module and the router for a threshold length of time,
wherein the threshold length of time is varied based on detected battery (119) levels, the threshold length of time being reduced as remaining battery (119) power decreases.

2. The router of claim 1, wherein executing the command causes at least the first interface module (112) to exit the power conservation mode and enter the full operation mode.

3. The router of claim 1, wherein the first interface module (112) includes a WiFi interface or the second interface module (114) includes a 3G network interface.

4. The router of claim 1, wherein the signal received through the second interface module (114) is a short messaging service, SMS, message.

5. The router of claim 1, wherein if the period of inactivity is determined based on lack of user devices connected to the router (110), the entire router (110) is placed into a lowpower mode whereas, if the period of inactivity is determined based on lack of traffic between the user devices and the router (110), only the first interface module (112) is placed into a low-power mode.

6. A method, comprising:
detecting a signal received through one interface module of two or more interface modules (112, 114) of a router (110), the one interface module being configured to interface with a wireless communication network, and the signal including a command; and
executing the command,
wherein executing the command causes one or more components of the router (110) to exit a power conservation mode and enter a full operation mode,
further comprising:
determining a period of inactivity, and
placing one or more components of the router (110) in a power conservation mode
wherein said period of inactivity is determined based on detection of no user devices connected to a WiFi interface module of the two or more interface modules (112, 114) for a threshold length of time, and, if user devices are connected to the WiFi interface module detection of no traffic between user devices connected to the WiFi interface module and the router (110) for a threshold length of time,
wherein the threshold length of time is varied based on detected battery (119) levels, the threshold length of time being reduced as remaining battery (119) power decreases.

7. The method of claim 6, wherein executing the command causes at least one other of the two or more interface modules (112, 114) to exit a power conservation mode and enter a full operation mode.

8. The method of claim 6, wherein the signal is received through a 3G network interface module.

9. The method of claim 6, wherein the signal received is a short messaging service, SMS, message.

## Patentansprüche

1. Router (110) weist auf:
ein erstes Schnittstellenmodul (112), ausgelegt zur drahtlosen Verbindung mit einem oder mehreren Endgeräten;
ein zweites Schnittstellenmodul (114), ausgelegt zur Verbindung mit einem Drahtloskommunikationsnetzwerk;
eine Batterie (119); und
eine Steuerung (116) ausgelegt um:
ein Signal, welches durch das zweite Schnittstellenmodul empfangen wird, zu erfassen, wobei das Signal einen Befehl umfasst, und
den Befehl auszuführen,
wobei die Ausführung des Befehls bewirkt, dass eine oder mehrere Komponenten des Routers (110) einen Stromsparmodus verlassen und in einen Voll-Betriebsmodus eintreten,
wobei die Steuerung (116) weiterhin ausgelegt ist um:
einen Zeitraum der Inaktivität zu ermitteln; und
eine oder mehrere Komponenten des Routers (110) in den Energiesparmodus zu setzen,
wobei die Steuerung ausgelegt ist, um die Zeit der Inaktivität zu ermitteln basierend auf der Erfassung, dass keine Endgeräte mit dem ersten Schnittstellenmodul, für eine Schwellenzeitdauer verbunden sind, und
wenn Endgeräte mit dem ersten Schnittstellenmodul verbunden sind, zu erfassen dass kein Verkehr zwischen den Endgeräten, verbunden mit dem ersten Schnittstellenelement, für eine Schwellenzeitdauer ist,
wobei die Schwellenzeitdauer, basierend auf einem erfassten Batterielevel (119), variiert wird, wobei die Schwellenzeitdauer reduziert wird wenn die verbleibende Batterieleistung (119) abnimmt.

2. Router nach Anspruch 1, wobei die Ausführung des Befehls dazu führt, dass mindestens das erste Schnittstelenmodul (112) den Stromsparmodus verlässt und in den Voll-Betriebsmodus eintritt.

3. Router nach Anspruch 1, wobei das erste Schnittstellenmodul (112) eine WiFi-Schnittstelle umfasst oder das zweite Schnittstellenmodul (114) ein 3G-Netzwerk umfasst.

4. Router nach Anspruch 1, wobei das durch das zweite Schnittstellenmodul (114) ankommende Signal eine Kurznachrichtendienst, SMS, Nachricht ist.

5. Router nach Anspruch 1, wobei wenn die Zeit der Inaktivität basierend auf dem Fehlen von Endgeräten, die mit dem Router (110) verbunden sind ermittelt wird, wird der gesamte Router (110) in einen Niedrigleistungsmodus gebracht, wohingegen wenn die Zeit der Inaktivität basierend auf dem Fehlen von Verkehr zwischen den Endgeräten und dem Router (110) ermittelt wird, nur das erste Schnittstellenmodul (112) in einen Niedrigleistungsmodus gebracht wird.

6. Verfahren, weist auf:
Erfassen eines durch ein Schnittstellenmodul von zwei oder mehreren Schnittstellenmodulen (112, 114) eines Routers (110) ankommendes Signal, wobei das eine Schnittstellenmodul zur Verbindung mit einem Drahtloskommunikationsnetzwerk ausgelegt ist und das Signal einen Befehl umfasst; und
Ausführen des Befehls,
wobei die Ausführung des Befehls bewirkt, dass eine oder mehrere Komponenten des Routers (110) einen Stromsparmodus verlassen und in einen Voll-Betriebsmodus eintreten,
weiterhin aufweisend:
Ermitteln einer Zeit der Inaktivität, und
Setzen eines oder mehrer Komponenten des Routers (110) in einen Stromsparmodus
wobei die genannte Zeit der Inaktivität auf der Erfassung beruht, dass für eine Schwellenzeitdauer kein Endgerät mit einem der WiFi-Schnittstellenmodule aus den zwei oder mehr Schnittstellenmodulen (112, 114) verbunden ist, und, wenn Endgeräte mit dem WiFi-Schnittstellenmodul verbunden sind, dass kein Verkehr zwischen dem mit dem WiFi-Schnittstellenmodul verbundenen Endgerät und dem Router (110) für eine Schwellenzeitdauer stattfindet,
wobei die Schwellenzeitdauer, basierend auf dem erfassten Batterielevel (119), variiert wird, wobei die Schwellenzeitdauer reduziert wird, wenn die verbleibende Batterieleistung (119) abnimmt.

7. Verfahren nach Anspruch 6, wobei die Ausführung des Befehls bewirkt, dass mindestens eine weitere der beiden oder mehrere Schnittstellenmodul (112, 114) den Sparmodus verlassen und in einen vollständigen Betriebsmodus eintreten.

8. Verfahren nach Anspruch 6, wobei das Signal über ein 3G Netzwerkschnittstellenmodul empfangen wird.

9. Verfahren nach Anspruch 6, wobei das empfangene Signal eine Kurznachrichtendienst, SMS, Nachricht ist.

## Revendications

1. Routeur (119) comprenant :
un premier module d'interface (112) configuré pour s'interfacer sans fil avec un ou plusieurs dispositifs utilisateurs ;
un deuxième module d'interface (114) configuré pour s'interfacer avec un réseau de communication sans fil ;
une batterie (119) ; et
un contrôleur (116) configuré pour :
détecter un signal reçu à travers le deuxième module d'interface, le signal contenant une commande ; et
exécuter la commande,
dans lequel l'exécution de la commande force un ou plusieurs composants du routeur (110) à quitter un mode de conservation d'énergie et à passer dans un mode de fonctionnement total,
dans lequel le contrôleur (116) est configuré en outre pour :
déterminer une période d'inactivité ; et
mettre un ou plusieurs composants du routeur (110) dans le mode de conservation d'énergie,
le contrôleur étant configuré pour déterminer la période d'inactivité sur la base de la détection de l'absence de dispositifs utilisateurs connectés au premier module d'interface pendant une période de temps de seuil, et
si des dispositifs utilisateurs sont connectés au premier module d'interface, la détection de l'absence de trafic entre des dispositifs utilisateurs connectés au premier module d'interface et au routeur pendant une période de temps de seuil,
dans lequel la période de temps de seuil est changée sur la base de niveaux détectés de la batterie (119), la période de temps de seuil étant réduite lorsque la puissance résiduelle de la batterie (119) diminue.

2. Routeur selon la revendication 1, dans lequel l'exécution de la commande force au moins le premier module d'interface (112) à quitter le mode de conservation d'énergie et à passer dans le mode de fonctionnement total.

3. Routeur selon la revendication 1, dans lequel le premier module d'interface (112) comprend une interface WiFi ou le deuxième module d'interface (114) comprend une interface de réseau 3G.

4. Routeur selon la revendication 1, dans lequel le signal reçu à travers le deuxième module d'interface (114) est un message de services de messages courts, SMS.

5. Routeur selon la revendication 1, dans lequel, si la période d'inactivité est déterminée sur la base d'une absence de dispositifs utilisateurs connectés au routeur (110), le routeur complet (110) est mis dans un mode basse puissance alors que, si la période d'inactivité est déterminée sur la base d'une absence de trafic entre les dispositifs utilisateurs et le routeur (110), seul le premier module d'interface (112) est mis dans un mode basse puissance.

6. Procédé comprenant :
la détection d'un signal reçu à travers un module d'interface parmi deux ou plus modules d'interface (112, 114) d'un routeur (110), le module d'interface étant configuré pour s'interfacer avec un réseau de communication sans fil, et le signal contenant une commande ; et
l'exécution de la commande,
dans lequel l'exécution de la commande force un ou plusieurs composants du routeur (110) à quitter un mode de conservation d'énergie et à passer dans un mode de fonctionnement total,
comprenant en outre :
la détermination d'une période d'inactivité ; et
la mise d'un ou plusieurs composants du routeur (110) dans un mode de conservation d'énergie,
dans lequel ladite période d'inactivité est déterminée sur la base de la détection de l'absence de dispositifs utilisateurs connectés à un module d'interface WiFi des deux ou plus modules d'interface (112, 114) pendant une période de temps de seuil et, si des dispositifs utilisateurs sont connectés au module d'interface WiFi, la détection de l'absence de trafic entre des dispositifs utilisateurs connectés au module d'interface WiFi et au routeur (110) pendant une période de temps de seuil,
dans lequel la période de temps de seuil est changée sur la base de niveaux détectés de la batterie (119), la période de temps de seuil étant réduite lorsque la puissance résiduelle de la batterie (119) diminue.

7. Procédé selon la revendication 6, dans lequel l'exécution de la commande force au moins un autre des deux ou plus modules d'interface (112, 114) à quitter un mode de conservation d'énergie et à passer dans un mode de fonctionnement total.

8. Procédé selon la revendication 6, dans lequel le signal est reçu à travers un module d'interface de réseau 3G.

9. Procédé selon la revendication 6, dans lequel le signal reçu est un message de services de messages courts, SMS.
